# FASCICULE DE BREVET EUROPEEN

(11) **EP 1 092 110 B1**
(45) Date de publication et mention de la délivrance du brevet: **06.10.2004**
(21) Numéro de dépôt: 99956067.5
(22) Date de dépôt: 17.11.1999
(51) Int. Cl.: F16L 59/14

(54) **CONDUITE FLEXIBLE A ENROULEMENT DE BANDE THERMO-ISOLANTE ET SPIRALEUSE DESTINEE A SA FABRICATION**
BIEGSAME ROHRLEITUNG MIT EINER AUFGEWICKELTEN, THERMISCH ISOLIERENDEN BAHN UND WICKELMASCHINE ZUR DEREN HERSTELLUNG
FLEXIBLE DUCT WITH HEAT INSULATING STRIP WINDING AND SPIRAL WINDER FOR MAKING SAME

(30) Priorité: 30.04.1999 FR 9905509
(43) Date de publication de la demande: 18.04.2001
(73) Titulaire: TECHNIP FRANCE, 92400 Courbevoie (FR)
(72) Inventeur: HARDY, Jean, F-76360 Barentin (FR); MALOBERTI, René, Antoine, F-94500 Champigny sur Marne (FR)
(74) Mandataire: Bertrand, Didier
(86) Numéro de dépôt international: PCT/FR1999/002819
(87) Numéro de publication internationale: WO 2000/066935

(56) Documents cités:
- EP-A- 0 400 689
- WO-A-94/19639
- DE-A- 2 207 924
- FR-A- 2 641 492
- PATENT ABSTRACTS OF JAPAN vol. 17, no. 618 (M-1510), 15 novembre 1993 (1993-11-15) & JP 05 187594 A (YUUC SANGYO), 27 juillet 1993 (1993-07-27)

## Description

La présente invention concerne une conduite flexible calorifugée pour véhiculer sur de grandes distances un fluide tel qu'un gaz, du pétrole, de l'eau ou d'autres fluides. L'invention vise tout particulièrement une telle conduite destinée à une exploitation pétrolière en mer.

On connaît, par exemple par le document EP 0 400 689 au nom de la Demanderesse, une conduite flexible de ce type, réalisée par l'enroulement hélicoïdal d'au moins une bande de matériau isolant autour d'un noyau central flexible. Chaque bande est formée par un profilé extrudé dudit matériau isolant, et en pratique un nombre suffisant de couches de bandes est déposé pour obtenir l'isolation requise. Une gaine extérieure d'étanchéité entoure l'isolation thermique.

La bande est déposée avec un angle proche de 90° par rapport à l'axe de la conduite et un intervalle entre spires, dit aussi déjoint, est nécessaire pour pouvoir enrouler la conduite à son rayon minimum de courbure sans augmenter sa raideur en cintrage. La valeur du déjoint entre spires est typiquement d'environ 10% de la largeur de la bande isolante. Faute de déjoint, la couche isolante se comporterait comme une gaine continue du matériau utilisé pour fabriquer ladite bande, ce qui augmenterait considérablement la raideur : ainsi, alors que la raideur d'une conduite munie d'un enroulement de calorifugeage avec déjoint de 10% est dans un exemple particulier de 9,4 kN/m², la raideur de la même conduite réalisée avec un enroulement jointif du même matériau isolant passerait à 26 kN/m².

Industriellement, les matériaux retenus pour ce type d'application doivent présenter une combinaison optimale de propriétés thermiques et mécaniques. Ainsi sont associés par exemple un bas coefficient de conductibilité thermique (lambda) et une résistance en compression compatible avec la pression hydrostatique engendrée par la hauteur d'eau dans laquelle la conduite est posée. Typiquement, les matériaux performants présentent un lambda de l'ordre d'au plus 0,15 W/m.°K, une contrainte de compression entre plateaux supérieure à 10 Mpa à 90°C, un module de traction supérieur à 600 Mpa à 23°C, et un allongement au seuil de déformation plastique supérieur à 7% à 23°C.

Bien que la conduite ci-dessus donne en général satisfaction, il est apparu que le déjoint nécessaire entre spires de la bande isolante entraînait des problèmes de deux sortes. D'une part, lorsque la gaine d'étanchéité extérieure se déchire, l'eau de mer peut envahir le volume libre formé par le déjoint et faire augmenter ainsi le lambda. D'autre part, la combinaison de la pression hydrostatique et de la température lorsque la conduite est en service peut conduire le matériau de la bande isolante à fluer dans le déjoint entre spires, ce qui a pour conséquences une augmentation du module apparent de la couche considérée, une augmentation de la raideur en flexion de la conduite, et une diminution de l'épaisseur de couche isolante conduisant à une baisse des performances d'isolation thermique de la structure flexible.

La solution qui consisterait à enrouler sans déjoint un profilé extrudé réunissant toutes les impositions thermiques et mécaniques (à savoir typiquement : un lambda de l'ordre d'au plus 0,15 W/m.°K, une contrainte de compression entre plateaux supérieure à 10Mpa à 90°C, un module de traction inférieur à 100Mpa à 23°C, et un allongement au seuil de déformation plastique supérieur à 7% à 23 °C n'est pas possible, un matériau extrudable présentant ces caractéristiques n'existant pas à ce jour, à la connaissance de la Demanderesse.

Le but de l'invention est de proposer une conduite flexible isolée ne présentant pas les inconvénients précités.

L'invention atteint son but grâce à une conduite flexible calorifugée pour le transport de fluides, réalisée par l'enroulement hélicoïdal, à pas régulier et avec déjoint, d'au moins une bande de matériau thermo-isolant autour d'un noyau central flexible, caractérisée par l'enroulement conjoint et sans jeu d'un profilé intermédiaire dans le déjoint des spires de bande, ce profilé intermédiaire étant réalisé dans une matière sensiblement. incompressible en volume. De la sorte, le profilé intermédiaire interdit le fluage et le remplissage potentiel des interstices interspires par l'eau de mer tout en autorisant la flexion qui fait travailler le système à volume constant. La bande isolante présente typiquement le déjoint et les caractéristiques physiques classiques de la bande connue. L'enroulement du profilé intermédiaire peut se faire en même temps que l'enroulement de la bande thermo-isolante ou séparément.

Des profilés extrudables incompressibles en volume peuvent notamment être obtenus à partir d'élastomères ou de polymères comprenant des blocs ou des séquences élastomériques. Il pourra notamment s'agir d'élastomère hydrogénocarboné, d'élastomère silicone ou de thermoplastique de type polyester ou polyéther à séquences élastomériques, ce dernier étant préféré en raison de sa résistance à l'eau de mer.

Avantageusement, des renforts unidirectionnels sont intégrés au profilé intermédiaire afin de pouvoir appliquer un effort de traction sans engendrer une réduction importante de section du profilé lors de l'enroulement sur ledit noyau central.

Les élastomères présentent une caractéristique élastique mise à profit lors de la pose. Le profilé intermédiaire a en effet avantageusement une section trapézoïdale et est posé de manière que la grande base se trouve déformée de manière élastique et s'appuie sur les côtés de manière à assurer l'ancrage du profilé, éviter le déjantage et assurer ainsi l'étanchéité entre spires. Cependant, d'autres formes de profilé sont possibles.

Des cavités remplies de liquides peuvent être incorporées au profilé intermédiaire.

Le matériau du profilé intermédiaire a avantageusement un lambda de 0,22 W/m.°K, ce qui ne diminue pas trop le lambda global de la couche de calorifugeage.

Ainsi, grâce à l'invention, il est possible d'obtenir une conduite calorifugée flexible dont la valeur du lambda n'est pas dégradée, dont la raideur en flexion du flexible jusqu'au rayon minimal de courbure n'est pas augmentée, dont l'étanchéité de la couche isolante est garantie en cas de déchirure de la gaine extérieure et dont l'épaisseur de la couche isolante est garantie.

L'invention concerne aussi une spiraleuse spécialement destinée à enrouler sur une conduite flexible calorifugée du type précité un profilé extrudé intermédiaire conforme à l'invention dans le déjoint, cette spiraleuse étant du type comportant des moyens de support pouvant tourner autour dudit noyau de la conduite, et étant caractérisée par une gouttière d'amenée du profilé au point de commettage, cette gouttière étant arquée transversalement de manière à introduire le profilé sous déformation élastique comme il a été expliqué.

D'autres avantages et caractéristiques seront mis en évidence à la lecture de la description qui suit, en référence aux dessins schématiques annexés sur lesquels :
La figure 1 est une vue en coupe longitudinale partielle d'une conduite calorifugée conforme à l'invention,
La figure 2 est une vue en coupe transversale d'un premier mode de réalisation du profilé extrudé intermédiaire conforme à l'invention,
La figure 3 est une vue en coupe transversale d'un second mode de réalisation du profilé extrudé intermédiaire conforme à l'invention,
La figure 4 est une vue en coupe transversale d'un troisième mode de réalisation du profilé extrudé intermédiaire conforme à l'invention,
Les figures 5 et 6 illustrent en coupes transversales deux variantes de bande de calorifugeage et de profilé intermédiaire,
La figure 7 est une vue en coupe partielle transversale à l'axe de la conduite flexible de la machine enrouleuse au voisinage du point de commettage,
La figure 8 est une vue selon F de la gouttière de la machine enrouleuse de la figure 7,
La figure 9 montre quatre étapes de la pose du profilé extrudé intermédiaire dans quatre plans parallèles de la machine de la figure 7.

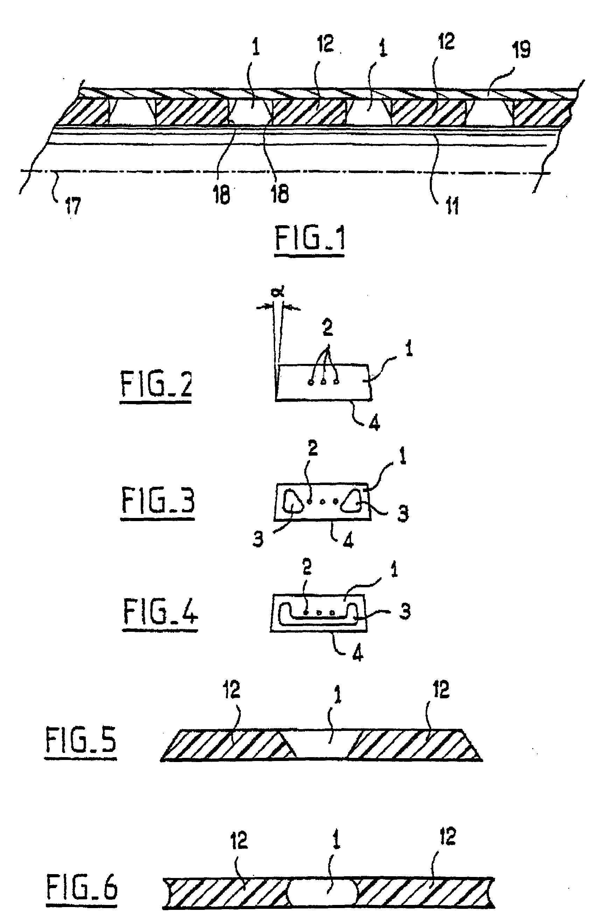

La figure 1 montre schématiquement une conduite réalisée par l'enroulement hélicoïdal à pas régulier et avec déjoint de la bande 12 de matériau thermo-isolant autour du noyau central flexible 11 d'axe 17, le déjoint étant comblé par le co-enroulement du profilé intermédiaire 1 conforme à l'invention, l'ensemble étant recouvert d'une gaine d'étanchéité 19. Pour faciliter la pose avec mise en déformation élastique du profilé dans le déjoint (comme montré de manière exagérée en 18 sur la figure 1), ce profilé intermédiaire 1 est de préférence de section trapézoïdale, comme le montrent les figures 1 à 4, l'inclinaison des faces latérales faisant avec la verticale un angle α compris par exemple entre 2 et 10°, par exemple 5°. La largeur de la face inférieure 4 correspondant à la grande base du profilé est légèrement plus grande (par exemple d'un dixième de mm) que la largeur de l'intervalle interspire ou déjoint (par exemple d'une quinzaine de mm) de la bande isolante qu'elle doit remplir. Compte tenu du fluage possible dans le temps de la matière du profilé intermédiaire et de l'affaiblissement de ses caractéristiques élastiques, cette déformation initiale du profilé peut n'être plus notable au bout d'un certain temps.

Au sein de la matière élastomère constituant le profilé 1 sont intégrés un ou plusieurs renforts unidirectionnels 2 tels que des rovings de fibres de verre, de Kevlar® ou analogue.

Des cavités longitudinales 3 remplies de fluides peuvent être prévues comme illustré sur les figures 3 et 4.

Les figures 5 et 6 montrent que l'invention s'applique également à des cas où la bande 12 n'est pas de section rectangulaire, mais peut être par exemple trapézoïdale, ou à bords concaves, le profilé 1 étant sensiblement complémentaire.

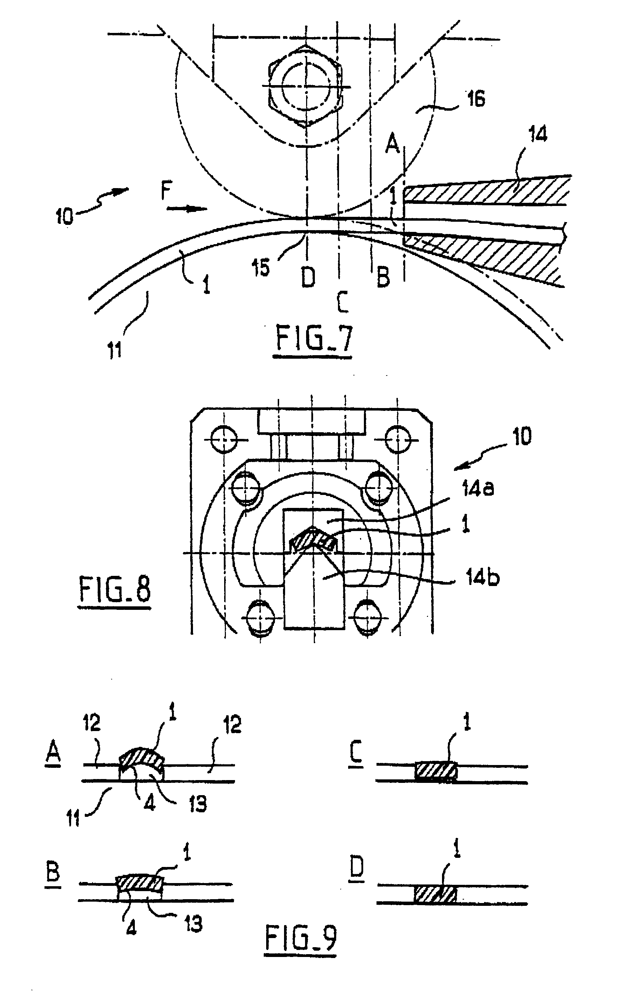

Les figures 7 à 9 montrent le principe de la pose du profilé intermédiaire 1. La pose se fait dans une enrouleuse représentée schématiquement sur les figures 7 et 8 en 10 et comprenant le noyau 11 de la conduite flexible sur lequel ont été posées les spires de la bande isolante 12, deux spires successives de la bande ménageant entre elles un déjoint 13 que doit venir combler le profilé intermédiaire 1.

L'enrouleuse 10 comprend des moyens (tels qu'un plateau annulaire) tournant autour du noyau 11, ces moyens supportant une gouttière 14 d'amenée du profilé 1 au point de commettage 15. Cette gouttière 14 comprend deux profils 14a et 14b arqués transversalement pour imposer au profilé 1 amené entre eux une courbure permettant à la face inférieure 4 du profilé 1 de s'introduire dans le déjoint 13, comme le montre la coupe 9A faite en sortie de gouttière. Les coupes suivantes 9B, 9C et 9D (sensiblement au point de commettage) montrent l'enfoncement progressif du profilé 1, aidé en cela par le galet 16, dans le déjoint 13 jusqu'à le combler complètement.

L'invention a été décrite en référence à un enroulement à pas court. Elle peut cependant s'appliquer à un enroulement à pas long, voire à un enroulement dit en S-Z dans lequel le sens d'enroulement change périodiquement.

## Revendications

1. Conduite flexible calorifugée pour le transport de fluides, réalisée par l'enroulement hélicoïdal, à pas régulier et avec déjoint, d'au moins une bande (14) de matériau thermo-isolant autour d'un noyau central flexible (11) et par l'enroulement conjoint d'un profilé extrudé intermédiaire (1) dans le déjoint (13) des spires de bande, **caractérisé par** l'enroulement sans jeu du profilé intermédiaire dans le déjoint, ce profilé intermédiaire (1) étant réalisé dans une matière sensiblement incompressible en volume.

2. Conduite selon la revendication 1, **caractérisée en ce que** le profilé intermédiaire (1) est obtenu à partir d'élastomères ou de polymères comprenant des blocs ou des séquences élastomériques.

3. Conduite selon la revendication 2, **caractérisée en ce que** le profilé intermédiaire (1) est réalisé à partir d'élastomère hydrogénocarboné, d'élastomère silicone ou de thermoplastique de type polyester ou polyéther à séquences élastomériques.

4. Conduite selon l'une quelconque des revendications 1 à 3, **caractérisée en ce que** des renforts unidirectionnels (2) sont intégrés au profilé intermédiaire (1)

5. Conduite selon l'une quelconque des revendications 1 à 4, **caractérisée en ce que** le profilé intermédiaire (1) a une section trapézoïdale.

6. Conduite selon la revendication 5, **caractérisée en ce qu'**au moins la grande base se trouve en déformation élastique à l'état posé.

7. Conduite selon l'une quelconque des revendications 2 à 6, **caractérisée en ce que** des cavités (3) remplies de liquides sont incorporées au profilé intermédiaire (1).

8. Conduite selon l'une quelconque des revendications 1 à 7, **caractérisée en ce que** le matériau thermo-isolant de la bande (14) présente les caractéristiques suivantes : un coefficient de conductibilité thermique de l'ordre d'au plus 0,15 W/m.°K, une contrainte de compression entre plateaux supérieure à 10 Mpa à 90°C, un module de traction supérieur à 600 Mpa à 23°C, et un allongement au seuil de déformation plastique supérieur à 7% à 23°C.

9. Conduite selon l'une quelconque des revendications 1 à 8, **caractérisée en ce que** le déjoint (13) entre les spires de la bande (14) est de l'ordre de 10% de la largeur de la bande.

10. Spiraleuse destinée enrouler sur une conduite flexible calorifugée pour le transport de fluides, réalisée par l'enroulement hélicoïdal, à pas régulier et avec jeu, d'au moins une bande (14) de matériau thermo-isolant autour d'un noyau central flexible (11), un profilé extrudé intermédiaire (1) dans le déjoint (13) des spires de bande, selon l'une quelconque des revendications 1 à 9, du type comportant des moyens de support pour tourner autour dudit noyau (11), **caractérisée par** une gouttière (14) d'amenée du profilé (1) au point de commettage (15) arquée transversalement.

## Patentansprüche

1. Wärmeisolierte flexible Leitung für den Fluidtransport, die durch schraubenlinienförmiges Wickeln mit regelmäßiger Steigung und gegenseitigem Trennabstand wenigstens eines Bandes (14) aus einem wärmeisolierenden Werkstoff um einen flexiblen Mittelkern (11) und durch damit einhergehendes Wickeln eines stranggepressten Zwischenprofils (1) in dem Trennabstand (13) der Windungen des Bandes verwirklicht ist, **gekennzeichnet durch** das spaltfreie Wickeln des Zwischenprofils in dem Trennabstand, wobei dieses Zwischenprofil (1) aus einem Werkstoff verwirklicht ist, dessen Volumen im Wesentlichen nicht komprimierbar ist.

2. Leitung nach Anspruch 1, **dadurch gekennzeichnet, dass** das Zwischenprofil (1) aus Elastomeren oder aus Polymeren, die elastomere Blöcke oder Sequenzen umfassen, erhalten wird.

3. Leitung nach Anspruch 2, **dadurch gekennzeichnet, dass** das Zwischenprofil (1) aus einem Kohlenwasserstoffelastomer, einem Silikonelastomer oder aus einem Thermoplast des Polyester- oder Polyether-Typs mit elastomeren Sequenzen verwirklicht ist.

4. Leitung nach einem der Ansprüche 1 bis 3, **dadurch gekennzeichnet, dass** in das Zwischenprofil (1) in einer Richtung verlaufende Verstärkungen (2) integriert sind.

5. Leitung nach einem der Ansprüche 1 bis 4, **dadurch gekennzeichnet, dass** das Zwischenprofil (1) einen trapezförmigen Querschnitt besitzt.

6. Leitung nach Anspruch 5, **dadurch gekennzeichnet, dass** wenigstens die große Basis im liegenden Zustand elastisch verformt ist.

7. Leitung nach einem der Ansprüche 2 bis 6, **dadurch gekennzeichnet, dass** in das Zwischenprofil (1) mit Flüssigkeiten gefüllte Hohlräume (3) eingebaut sind.

8. Leitung nach einem der Ansprüche 1 bis 7, **dadurch gekennzeichnet, dass** der wärmeisolierende Werkstoff des Bandes (14) die folgenden Eigenschaften aufweist: einen Wärmeleitungskoeffizienten in der Größenordnung von mehr als 0,15 W/mK, eine Druckbeanspruchung zwischen Platten von mehr als 10 MPa bei 90 °C, einen Zugmodul von mehr als 600 MPa bei 23 °C und eine Ausdehnung bis zum Schwellenwert der elastischen Verformung von mehr als 7 % bei 23 °C.

9. Leitung nach einem der Ansprüche 1 bis 8, **dadurch gekennzeichnet, dass** der Trennabstand (13) zwischen den Windungen des Bandes (14) in der Größenordnung von 10 % der Breite des Bandes liegt.

10. Spiralbindemaschine, die dazu vorgesehen ist, auf eine wärmeisolierte flexible Leitung für den Fluidtransport, die durch schraubenlinienförmiges Wickeln mit regelmäßiger Schrittweite und mit gegenseitigem Trennabstand wenigstens eines Bandes (14) aus einem wärmeisolierenden Werkstoff um einen flexiblen Mittelkern (11) verwirklicht ist, in dem Trennabstand (13) der Windungen des Bandes ein stranggepresstes Zwischenprofil (1) nach einem der Ansprüche 1 bis 9 zu wickeln, und von dem Typ ist, der Unterstützungsmittel für die Drehung um den Kern (11) umfasst, **gekennzeichnet durch** eine transversal gekrümmte Rinne (14) für die Zuführung des Profils (1) zu dem Verseilungspunkt (15).

## Claims

1. Lagged flexible pipe for conveying fluids, produced by helically winding, at a uniform pitch and with a gap, at least one strip (14) made of thermal insulation around a flexible central core (11), and by the joint winding of an intermediate extruded section (1) into the gap (13) between the turns of strip, **characterized by** the gap-free winding of the intermediate extruded section into the gap, this intermediate section (1) being made of a material which volumewise is more or less incompressible.

2. Pipe according to Claim 1, **characterized in that** the intermediate section (1) is obtained from elastomers or polymers containing elastomer blocks or sequences.

3. Pipe according to Claim 2, **characterized in that** the intermediate section (1) is made of hydrocarbon elastomer, silicone elastomer or thermoplastic of the polyester or polyether type with elastomer sequences.

4. Pipe according to any one of Claims 1 to 3, **characterized in that** unidirectional strengtheners (2) are built into the intermediate section (1).

5. Pipe according to any one of Claims 1 to 4, **characterized in that** the intermediate section (1) has a trapezoidal cross section.

6. Pipe according to Claim 5, **characterized in that** at least the long base is subjected to elastic deformation in the laid state.

7. Pipe according to any one of Claims 2 to 6,
**characterized in that** liquid-filled cavities (3)

8. Pipe according to any one of Claims 1 to 7,
**characterized in that** the thermal insulation of the strip (14) has the following properties: a coefficient of thermal conductivity of the order of at most 0.15 W/m.K, a compressive stress between plates in excess of 10 MPa at 90°C, a modulus in tension in excess of 600 MPa at 23°C, and an elongation at the threshold of plastic deformation in excess of 7% at 23°C.

9. Pipe according to any one of Claims 1 to 8,
**characterized in that** the gap (13) between the turns of strip (14) is of the order of 10% of the width of the strip.

10. Spiralling machine intended to wind, onto a lagged flexible pipe for conveying fluids, produced by helically winding, at a uniform pitch and with gaps, at least one strip (14) made of thermal insulation around a flexible central core (11), an intermediate extruded section (1) into the gaps (13) between the turns of strip, according to any one of Claims 1 to 9, of the type comprising support means which can rotate around the said core (11), the machine being **characterized by** a transversely arched trough (14) for conveying the section (1) to the lay point (15).
